# EUROPEAN PATENT APPLICATION

(11) **EP 4 336 679 A1**
(43) Date of publication of application: **13.03.2024**
(21) Application number: 22819813.1
(22) Date of filing: 15.02.2022
(51) Int. Cl.: H01S 3/042, H01S 3/067, G02B 6/122

(54) **LASER AMPLIFICATION MEDIUM AND LASER AMPLIFICATION MEDIUM MANUFACTURING METHOD**

(30) Priority: 11.06.2021 JP 2021097759
(71) Applicant: Mitsubishi Heavy Industries, Ltd., Tokyo 100-8332 (JP); RIKEN, Wako-shi, Saitama 351-0198 (JP)
(72) Inventor: HAMAMOTO, Koichi, Tokyo 100-8332 (JP); WADA, Satoshi, Wako-shi, Saitama 351-0198 (JP); OGAWA, Takayo, Wako-shi, Saitama 351-0198 (JP)
(74) Representative: Hoffmann Eitle
(86) International application number: PCT/JP2022/005808
(87) International publication number: WO 2022/259622

(57) **Abstract**

Provided are a laser amplification medium that is easy to manufacture and a laser amplification medium manufacturing method that is easy to implement. The laser amplification medium includes: a clad part; a first core part and a second core part; a virtual first, second, and third layers. The first core part and the second core part extend parallel to an axis direction and have side faces covered with the clad part. The first layer includes the first core part, the second core part, and a part of the clad part. The second layer and the third layer include a part of the clad part. The first layer is laminated and bonded in a lamination direction orthogonal to the axis direction between the second layer and the third layer. Each side face of the first core part and the second core part includes a first planar portion and a second planar portion. The first planar portion is included in a first surface of the first layer, the first surface being a virtual bonding interface with the second layer. The second planar portion is included in a second surface of the first layer, the second surface being a virtual bonding interface with the third layer.

## Description

### [Technical Field]

The present invention relates to a laser amplification medium and a laser amplification medium manufacturing method.

### [Background Art]

There is a demand for a high-quality and high-power laser in the fields of laser machining, science research, nuclear fusion, space debris removal, safety compensation, and the like. For a method to realize such a laser, solid-state lasers and fiber lasers are studied in many cases.

In fiber lasers among the above lasers, since the area of a waveguide is relatively small, the power density inside the waveguide tends to be relatively high. This is particularly notable in a case of pulsed lasers. As a result, problems of damage occurring in a material such as an optical fiber, deterioration of characteristics occurring due to nonlinear optical effect, and the like are known.

Accordingly, a technique to obtain large output power by combining a large number of fiber lasers each having small output power has been proposed.

In relation to the above, Non-Patent Literature 1 (R. Soulard et al., "ICAN: A novel laser architecture for space debris removal", Acta Astronautica 105, 2014, pp. 192-200) and Non-Patent Literature 2 (T. Ebisuzaki et al, "Demonstration designs for the remediation of space debris from the International Space Station", Acta Astronautica 112, 2015, pp. 102-113) propose to combine a large number of (for example, 10,000) fiber lasers called a coherent amplification network (CAN).

Further, Patent Literature 1 (Japanese Patent Application Laid-Open No. 2013-148769) discloses a multiple-beam combining device. This multiple-beam combining device includes a phase shift unit, a superimposing unit, an observation unit, and a phase control unit. The phase shift unit generates a plurality of shift laser beams by shifting respective phases of the plurality of laser beams. The superimposing unit generates a plurality of superimposed laser beams by superimposing each of the plurality of shift laser beams with a reference beam. The observation unit generates interference pattern information about a spatial interference pattern appearing when observing each of the plurality of superimposed laser beams. The phase control unit performs feedback control on a phase shift shifted by the phase shift unit based on the interference pattern information obtained for each of the plurality of superimposed laser beams and thereby sets the plurality of shift laser beams to a desired state.

### [Citation List]

### [Patent Literature]

[PTL 1]
Japanese Patent Application Laid-Open No. 2013-148769

### [Non Patent Literature]

[NPL 1]
   R. Soulard et al., "ICAN: A novel laser architecture for space debris removal", Acta Astronautica 105, 2014, pp. 192-200
[NPL 2]
   T. Ebisuzaki et al, "Demonstration designs for the remediation of space debris from the International Space Station", Acta Astronautica 112, 2015, pp. 102-113

### [Summary of Invention]

### [Technical Problem]

A laser amplification medium that is easy to manufacture and a laser amplification medium manufacturing method that is easy to implement are provided. Other objects and new features will be apparent from description in the present specification and the appended drawings.

### [Solution to Problem]

According to one embodiment, a laser amplification medium includes: a clad part; a first core part and a second core part; a virtual first layer; a virtual second layer; and a virtual third layer. The clad part has a predetermined first refractive index. The first core part and the second core part each have a second refractive index that is higher than the first refractive index, each extend parallel to a predetermined axis direction, and have respective side faces covered with the clad part. The virtual first layer includes the first core part, the second core part, and a part of the clad part. The virtual second layer and the virtual third layer each include another part of the clad part. The first layer is laminated and bonded between the second layer and the third layer and in a predetermined lamination direction orthogonal to the axis direction. In each of the first core part and the second core part, the side faces include a first planar portion and a second planar portion. The first planar portion is included in a virtual first surface of the first layer, the first surface being a virtual bonding interface with the second layer and being orthogonal to the lamination direction. The second planar portion is included in a virtual second surface of the first layer, the second surface being a virtual bonding interface with the third layer and being orthogonal to the lamination direction, and opposes to the first planar portion.

According to one embodiment, a laser amplification medium manufacturing method includes: producing a first layer including a plurality of first regions having a predetermined first refractive index and a plurality of second regions having a second refractive index that is larger than the first refractive index; producing a second layer and a third layer having the first refractive index; and laminating the second layer, the first layer, and the third layer in this order in a predetermined lamination direction. The laminating includes bonding the second layer to a first surface of the first layer orthogonal to the lamination direction so as to bond the plurality of first regions and the second layer to each other and bonding the third layer to a second surface of the first layer opposing to the first surface so as to bond the plurality of first regions and the third layer to each other. The producing the first layer includes producing the plurality of second regions so that the plurality of second regions comprise a first core part and a second core part, the first core part and the second core part each extending parallel to a predetermined axis direction parallel to the first surface and each having a side face including a first planar portion included in the first surface and a second planar portion included in the second surface. The laminating the second layer, the first layer, and the third layer includes laminating the second layer, the first layer, and the third layer so that the plurality of first regions, the second layer, and the third layer, which are integrated with each other, function as a clad part covering the side face in each of the first core part and the second core part.

### [Advantageous Effects of Invention]

According to one embodiment described above, a laser amplification medium that is easy to manufacture and a laser amplification medium manufacturing method that is easy to implement can be provided.

### [Brief Description of Drawings]

[Fig. 1A]

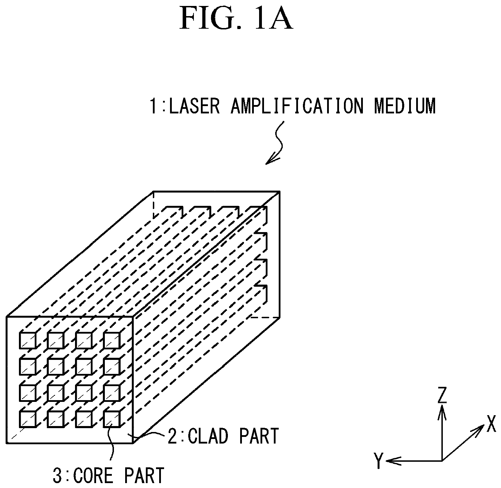

   Fig. 1A is a perspective view illustrating a configuration example of a laser amplification medium according to one embodiment.
[Fig. 1B]

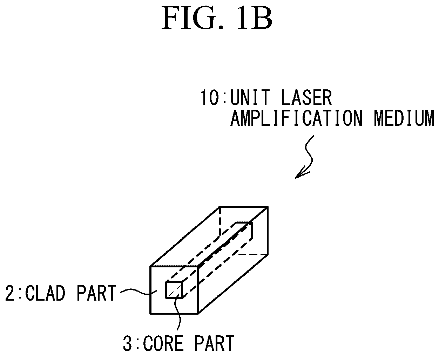

   Fig. 1B is a transparent perspective view illustrating a configuration example of a virtual unit laser amplification medium obtained when a part of the laser amplification medium of FIG. 1A is extracted.
[Fig. 2]

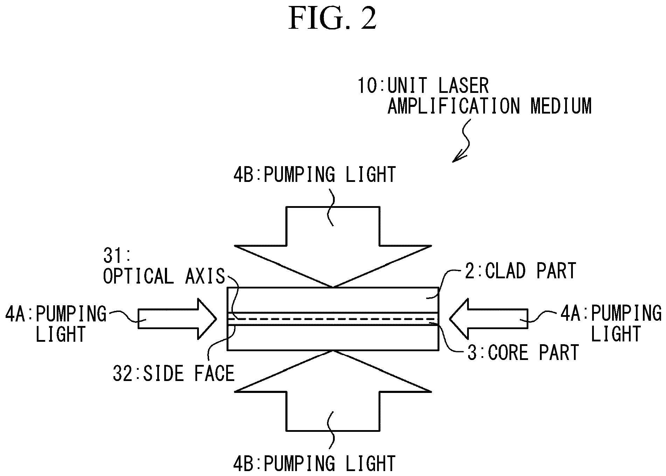

   Fig. 2 is a sectional view of the unit laser amplification medium of Fig. 1B taken along a cross section passing through an optical axis of a core part.
[Fig. 3A]

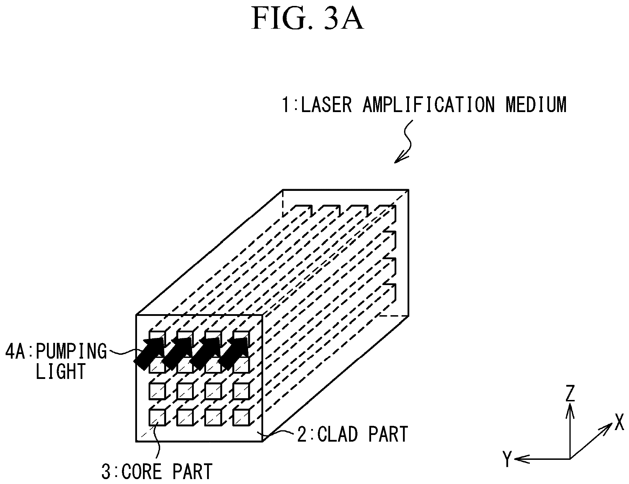

   Fig. 3A is a transparent perspective view illustrating an example of a method of causing pumping light to enter an end face of each core part of the laser amplification medium of Fig. 1A.
[Fig. 3B]

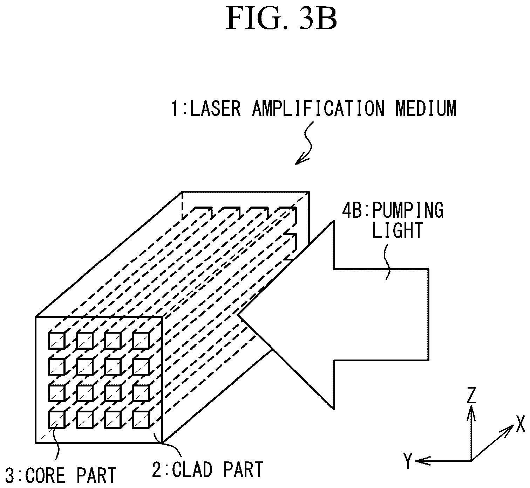

   Fig. 3B is a transparent perspective view illustrating an example of a method of causing pumping light to enter a side face of each core part of the laser amplification medium of Fig. 1A.
[Fig. 3C]

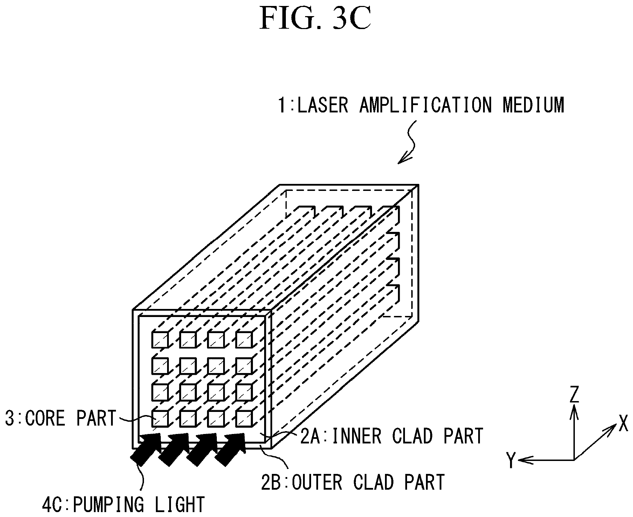

   Fig. 3C is a transparent perspective view illustrating a configuration of a modified example of the laser amplification medium of Fig. 1A and an example of a method of causing pumping light to enter the laser amplification medium according to this modified example.
[Fig. 4A]

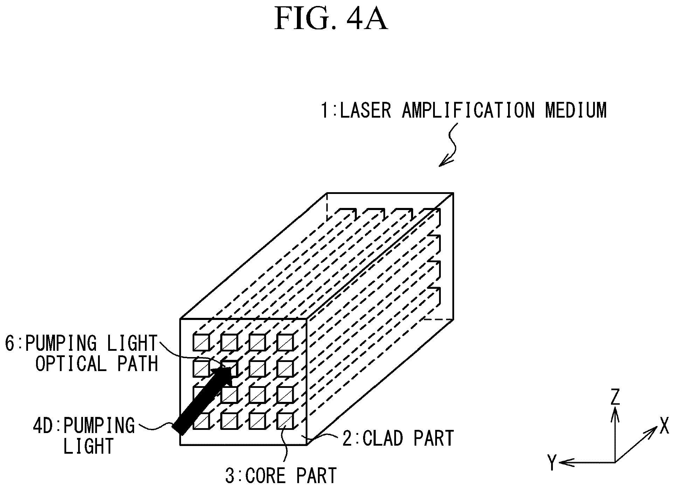

   Fig. 4A is a transparent perspective view illustrating a configuration of another modified example of the laser amplification medium of Fig. 1A and an example of a method of causing pumping light to enter the laser amplification medium according to this modified example.
[Fig. 4B]

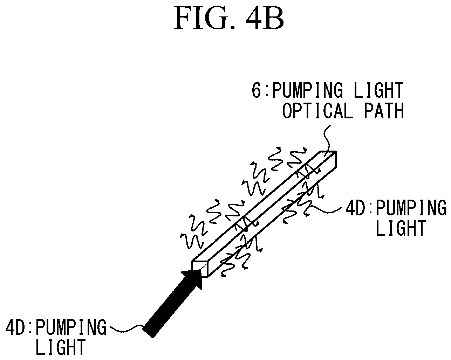

   Fig. 4B is a perspective view illustrating an example of a view in which pumping light entering an end of a pumping light optical path of Fig. 4A leaks out of a side face of the pumping light optical path.
[Fig. 5]

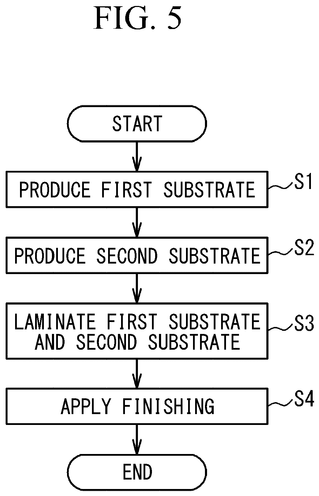

   Fig. 5 is a flowchart illustrating a configuration example of a laser amplification medium manufacturing method according to one embodiment.
[Fig. 6A]

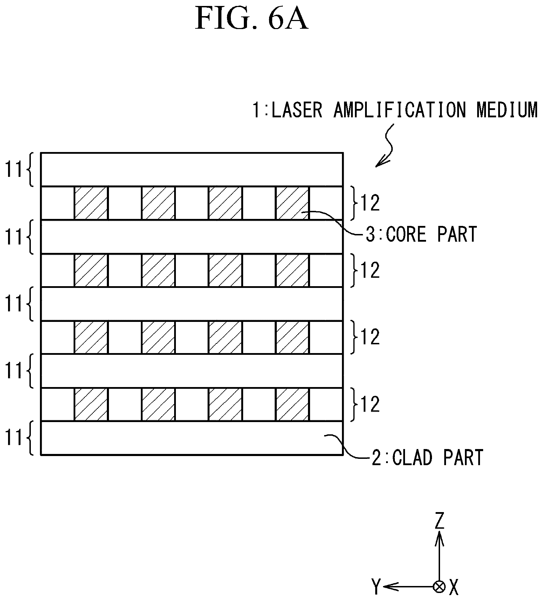

   Fig. 6A is a sectional view illustrating that the laser amplification medium of Fig. 1A can be manufactured by laminating first substrates and second substrates.
[Fig. 6B]

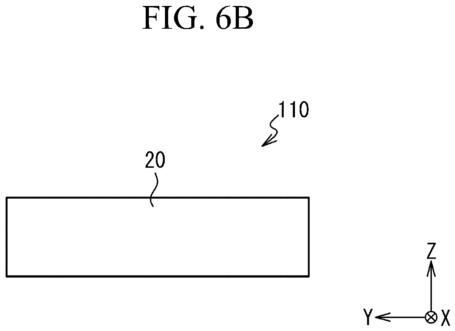

   Fig. 6B is a sectional view illustrating an example of a state during manufacturing of the laser amplification medium.
[Fig. 6C]

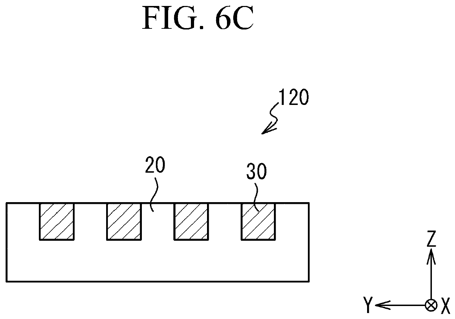

   Fig. 6C is a sectional view illustrating an example of a state during manufacturing of the laser amplification medium.
[Fig. 6D]

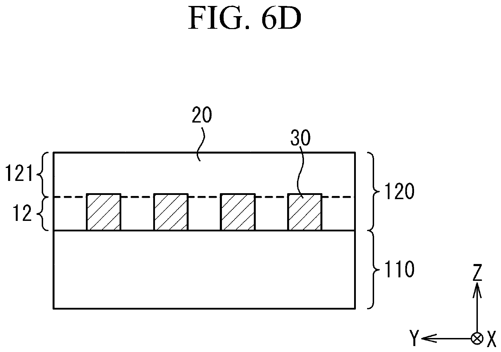

   Fig. 6D is a sectional view illustrating an example of a state during manufacturing of the laser amplification medium.
[Fig. 6E]

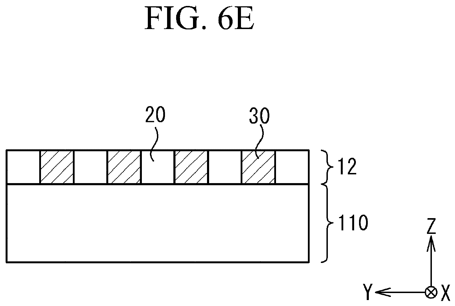

   Fig. 6E is a sectional view illustrating an example of a state during manufacturing of the laser amplification medium.
[Fig. 6F]

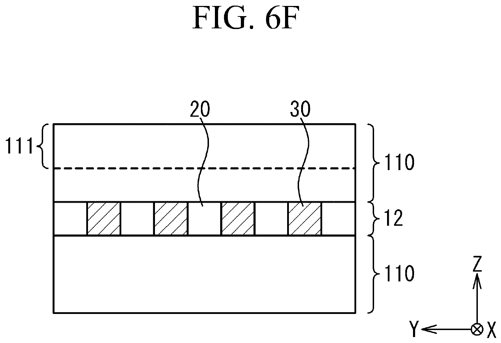

   Fig. 6F is a sectional view illustrating an example of a state during manufacturing of the laser amplification medium.
[Fig. 6G]

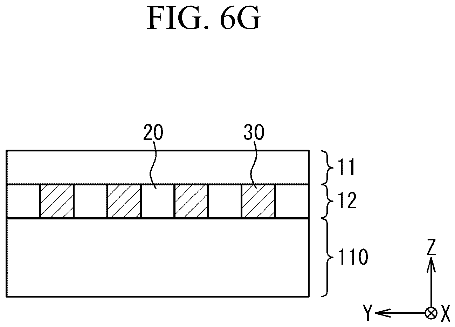

   Fig. 6G is a sectional view illustrating an example of a state during manufacturing of the laser amplification medium.
[Fig. 6H]

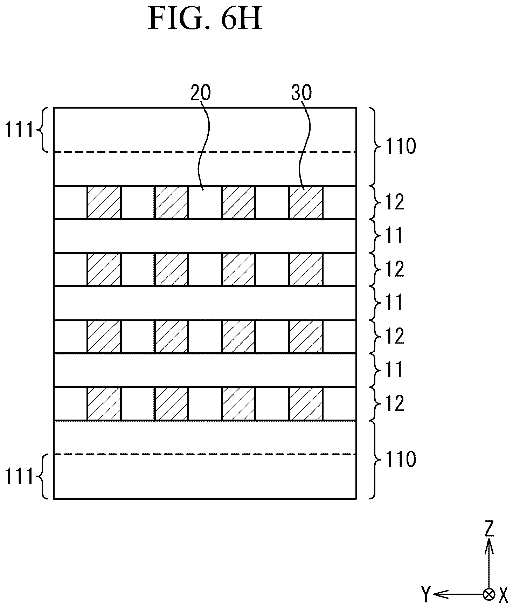

   Fig. 6H is a sectional view illustrating an example of a state during manufacturing of the laser amplification medium.
[Fig. 7]

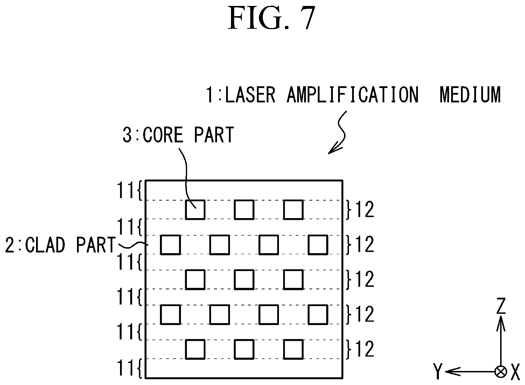

   Fig. 7 is a sectional view of a configuration example of a laser amplification medium according to one embodiment.
[Fig. 8]

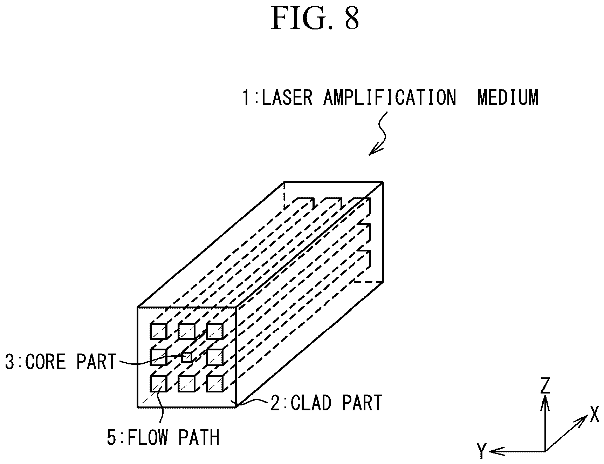

   Fig. 8 is a transparent perspective view illustrating a configuration example of a laser amplification medium according to one embodiment.
[Fig. 9]

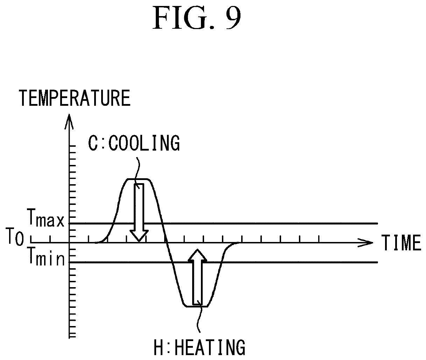

   Fig. 9 is a graph illustrating an example of a method of controlling the temperature of the laser amplification medium by supplying a flow of a predetermined fluid into the laser amplification medium using a flow path according to one embodiment.
[Fig. 10A]

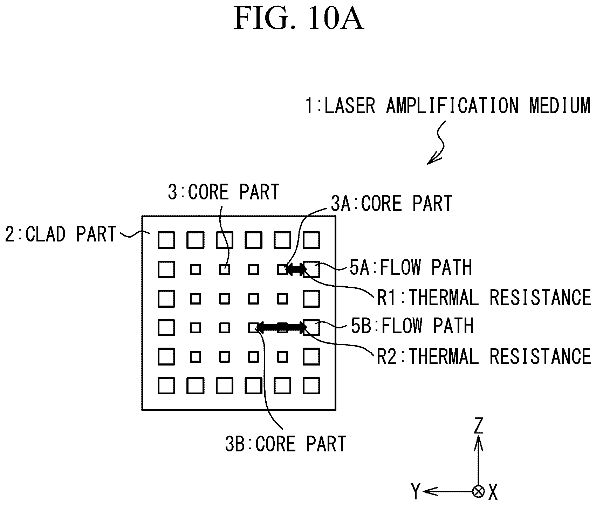

   Fig. 10A is a sectional view illustrating a configuration example of the laser amplification medium according to one embodiment.
[Fig. 10B]

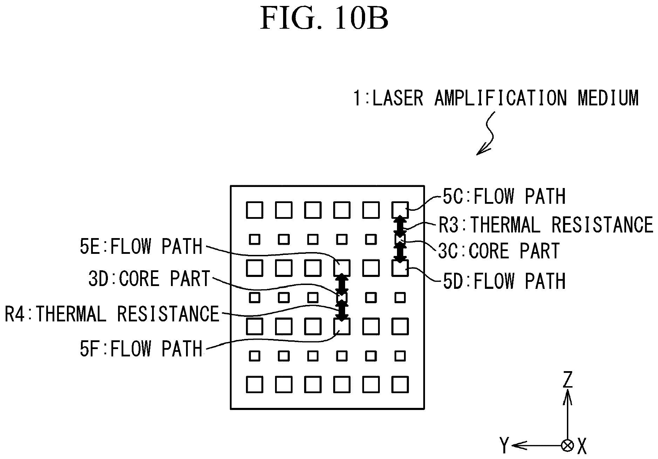

   Fig. 10B is a sectional view illustrating another configuration example of the laser amplification medium according to one embodiment.
[Fig. 11]

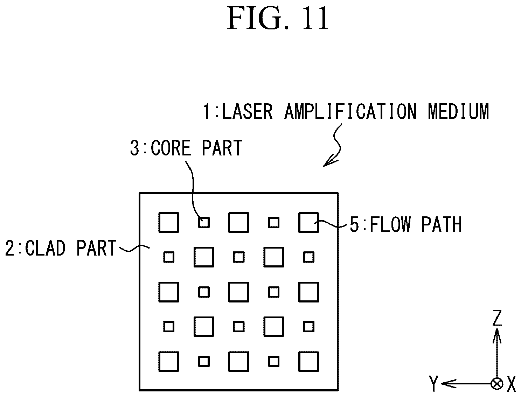

   Fig. 11 is a sectional view illustrating yet another configuration example of the laser amplification medium according to one embodiment.
[Fig. 12]

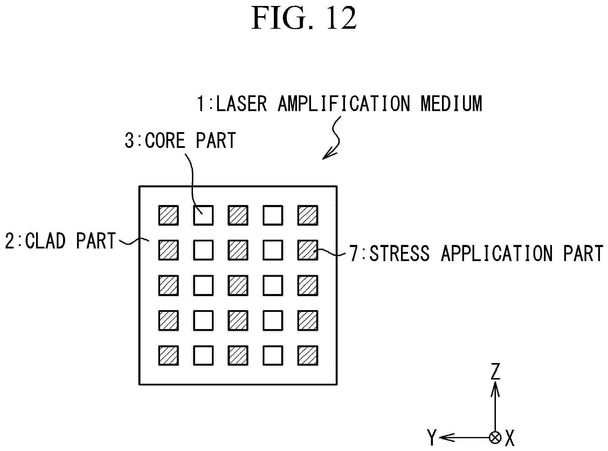

   Fig. 12 is a sectional view illustrating a configuration example of the laser amplification medium according to one embodiment.

### [Description of Embodiments]

Embodiments of a laser amplification medium and a laser amplification medium manufacturing method according to the present invention will be described below with reference to the appended drawings.

### [First Embodiment]

A configuration example of a laser amplification medium 1 according to the present embodiment will be described with reference to Fig. 1A. Fig. 1A is a transparent perspective view illustrating a configuration example of the laser amplification medium 1 according to one embodiment.

Components of the laser amplification medium 1 of Fig. 1A will be described. The laser amplification medium 1 of Fig. 1A includes a clad part 2 and a plurality of core parts 3. The total number of core parts 3 is 16 in the example of Fig. 1A, and this is a mere example and does not limit the present embodiment. On the other hand, it is preferable to have a single clad part 2.

Each core part 3 extends in one direction and is formed in a shape having planar faces on the opposing side faces. For example, in the example of Fig. 1A, respective core parts 3 have the same rectangular parallelepiped shape. Further, the clad part 2 also has a rectangular parallelepiped shape, but the dimension thereof differs from that of the core part 3. However, these are mere examples and do not limit the present embodiment. For example, the core part 3 may have a hexagonal prism shape whose sectional shape orthogonal to the extending direction thereof is hexagonal.

The positional relationship of the components of the laser amplification medium 1 of Fig. 1A will be described. In the example of Fig. 1A, 16 core parts 3 in total extend in one direction. This extending direction is referred to as an X-axis direction. Further, the clad part 2 also extends in the same X-axis direction. The core parts 3 are doped with a laser gain medium and can emit an amplified beam that has been amplified from seed light by incidence of the pumping light and the seed light, as described later.

Herein, a cross section of the laser amplification medium 1 taken along a virtual plane orthogonal to the X-axis direction is considered. The configuration of this cross section is the same as the configuration at both end faces of the laser amplification medium 1. In other words, in the X-axis direction, the length of the clad part 2 and the length of respective core parts 3 are the same. Furthermore, in other words, each end face of the core parts 3 is exposed flushed with each end face of the clad part 2 in the X-axis direction. However, this configuration is an example for illustration of the embodiment, the end face of the core part 3 is not necessarily required to be orthogonal to the X-axis. This can provide adjustment of the emission direction or an effect of preventing return light. Further, a coating such as an antireflective coating may be applied to the end face of the core part 3.

The side face of the core part 3 is formed in a shape having opposing planar faces extending parallel to the X-axis direction. For example, in the example of Fig. 1A, the side faces of each core part 3 have a rectangular shape in the cross section or the end face described above. In the example of Fig. 1A, the side faces of the core part 3 refer to four surfaces parallel to the X-axis direction out of six surfaces of the rectangular parallelepiped. Further, in the cross section or the end face described above, the side faces of the 16 core parts 3 in total are arranged in a 4x4 two-dimensional array. The two directions related to this two-dimensional array are referred to as a Y-axis direction and a Z-axis direction. Furthermore, it is preferable that the side faces of each core parts 3 be parallel to the Y-axis direction or the Z-axis direction.

The laser amplification medium 1 of Fig. 1A has a structure in which the core parts 3 extending parallel to the X-axis direction are arrayed inside the clad part extending parallel to the X-axis direction, and the side faces of the core parts 3 are formed to have opposing planar faces extending parallel to the X-axis direction. For example, the core part 3 according to the present embodiment has a shape of a quadrangular prism or a rectangular parallelepiped. Furthermore, in the present embodiment, it is preferable that the dimension in the width direction of each core part 3 be about 5 times to 10 times the diameter of a core of a general optical fiber. In other words, it is preferable that the sectional area of the core part 3 according to the present embodiment be about 25 times to 100 times the sectional area of a core of a general optical fiber. However, these numerical values are mere examples and do not limit the present embodiment.

In each core part 3 of Fig. 1A, the side face thereof is covered with the clad part 2. In other words, the clad part 2 is present between two adjacent core parts 3.

It will be described with reference to Fig. 1B that each core part 3 of Fig. 1A and the clad part 2 covering the side faces thereof may also function as an optical waveguide. Fig. 1B is a transparent perspective view illustrating a configuration example of a virtual unit laser amplification medium 10 obtained when a part of the laser amplification medium 1 of FIG. 1A is extracted.

The unit laser amplification medium 10 of Fig. 1B includes a single core part 3 and the clad part 2 covering the side faces thereof. Herein, the refractive index of the core part 3 is higher than the refractive index of the clad part 2. A laser beam entering one end face of the core part 3 is expected not to leak out of the core part 3 to the clad part 2 provided that the incident angle thereof satisfies a predetermined condition.

It can also be said that the total of 16 unit laser amplification media 10 of Fig. 1B are prepared, arranged in a 4x4 two-dimensional array, and bonded to each other, all the clad parts 2 are optically integrated, and thereby the laser amplification medium 1 of Fig. 1A can be obtained.

A plurality of methods of causing pumping light 4A, 4B, 4C, 4D to enter the laser amplification medium 1 according to the present embodiment will be described with reference to Fig. 2, Fig. 3A, Fig. 3B, Fig. 3C, Fig. 4A, and Fig. 4B. Fig. 2 is a sectional view of the unit laser amplification medium 10 of Fig. 1B taken along a cross section passing through an optical axis 31 of the core part 3. Note that the optical axis direction is the same X-axis direction in all the drawings of the present disclosure.

In the example of Fig. 2, the pumping light 4A, 4B is caused to enter the unit laser amplification medium 10 by generally two types of methods. In the first method, the pumping light 4A is caused to enter the end faces of the core part 3. However, the pumping light 4A is not necessarily required to enter the end faces parallelly to the optical axis 31 of the core part 3 and not necessarily required to enter both the end faces. In the second method, the pumping light 4B is caused to enter the side faces 32 of the core part 3. Herein, the pumping light 4B is not necessarily required to perpendicularly enter the side face 32 of the core part 3 and not necessarily required to enter the side faces 32 from a plurality of directions. Note that it is also possible to cause the pumping light 4A, 4B to enter both the end face and the side face 32 of the core part 3 in combination of these two methods. In any case, it is preferable that the seed light to be amplified by the energy of the pumping light 4A, 4B be caused to enter the end face of the core part 3.

Fig. 3A is a transparent perspective view illustrating an example of a method of causing the pumping light 4A to enter the end face of each core part 3 of the laser amplification medium 1 of Fig. 1A. The pumping light 4A illustrated in Fig. 3A corresponds to the pumping light 4A of Fig. 2. Although depiction of incident positions of the pumping light 4A is omitted for some of the core parts 3 in Fig. 3A for better visibility, it is preferable to cause the pumping light 4A to enter all the core parts 3, respectively, in practice.

Fig. 3B is a transparent perspective view illustrating an example of a method of causing the pumping light 4B to enter the side face 32 of each core part 3 of the laser amplification medium 1 of Fig. 1A. The pumping light 4B illustrated in Fig. 3B corresponds to the pumping light 4B of Fig. 2. In Fig. 3B, incidence of the pumping light 4B from the side face of the clad part 2 causes the pumping light 4B to also enter the inside of the core parts 3 from the side faces 32 of the core parts 3. Therefore, in the case of Fig. 3B, unlike the case of Fig. 3A, by only causing the pumping light 4B to enter the side face of the clad part 2 at once, it is possible to amplify the seed light present inside all the core parts 3. Note that, although some of the core parts 3 may be geometrically shielded by other core parts 3, a configuration in which unabsorbed pumping light 4B is absorbed by the shielded core part 3 can be employed because the distance between the core parts 3 in the direction of the pumping light 4B is small.

Fig. 3C is a transparent perspective view illustrating a configuration of a modified example of the laser amplification medium 1 of Fig. 1A and an example of a method of causing the pumping light 4C to enter the laser amplification medium 1 according to this modified example. The laser amplification medium 1 according to the modified example of Fig. 3C is obtained by applying a double clad structure to the laser amplification medium 1 of FIG. 1A. In other words, the laser amplification medium 1 of Fig. 3C is obtained by replacing the clad part 2 of the laser amplification medium 1 of Fig. 1A with the inner clad part 2A and the outer clad part 2B. Alternatively, the laser amplification medium 1 of Fig. 3C is obtained by changing the name of the clad part 2 of the laser amplification medium 1 of Fig. 1A to the inner clad part 2A and adding the outer clad part 2B to the outside of the side face of the inner clad part 2A.

In the case of Fig. 3C, for example, when the pumping light 4C is caused to enter the end face of the inner clad part 2A at a suitable incident angle, the pumping light 4C repeats total reflection at the interface between the inner clad part 2A and the outer clad part 2B, and in the meanwhile, the pumping light 4C also enters the inside of the core parts 3 from the side faces 32 of the core parts 3. In this case, the refractive index of the outer clad part 2B may be smaller than the refractive index of the inner clad part 2A. Also in the case of Fig. 3C, unlike the case of Fig. 3A, by only causing the pumping light 4C to enter the end face of the inner clad part 2A at once, it is possible to amplify the seed light present inside all the core parts 3.

Fig. 4A is a transparent perspective view illustrating a configuration of another modified example of the laser amplification medium 1 of Fig. 1A and an example of a method of causing the pumping light 4D to enter the laser amplification medium 1 according to this modified example. The laser amplification medium 1 according to the modified example of Fig. 4A is obtained by replacing some of the core parts 3 in the laser amplification medium 1 of Fig. 1A with a pumping light optical path 6 that is not doped with any laser gain medium.

Fig. 4B is a perspective view illustrating an example of a view in which the pumping light 4D entering the end of the pumping light optical path 6 of Fig. 4A leaks out of the side face of the pumping light optical path 6. In the example of Fig. 4B, the pumping light optical path 6 has a function of causing incident light to leak out of the pumping light optical path 6. For example, the pumping light optical path 6 includes a scattering source that scatters indicant light or an irregular-reflection source that irregularly reflects incident light. Accordingly, the pumping light 4D entering the end of the pumping light optical path 6 leaks out in any directions of the side faces of the pumping light optical path 6. The pumping light 4D leaking out of the side faces of the pumping light optical path 6 enters the inside of all the core parts 3 from the side faces 32 of the core parts 3. Herein, suitable machining may be applied to the side faces of the pumping light optical path 6 so that the pumping light 4D easily leaks out to the clad part 2 covering these side faces.

The pumping light 4A, 4B, 4C, 4D described above may be, for example, a semiconductor laser beam having an absorption wavelength of the laser gain medium.

As discussed above, in the laser amplification medium 1 of Fig. 4A and Fig. 4B, it is possible to amplify the seed light present inside all the core parts 3 by causing the pumping light 4D to enter the inside of the pumping light optical path 6 from the end face thereof. Therefore, also in the case of Fig. 4A and Fig. 4B, unlike the case of Fig. 3A, by only causing the pumping light 4D to enter the end face of the pumping light optical path 6 at once, it is possible to amplify the seed light present inside all the core parts 3.

As described above, the laser amplification medium 1 according to the present embodiment can amplify the seed light present inside all the core parts 3 by incidence of the pumping light 4B, 4C, or 4D at once.

An example of a method of easily manufacturing the laser amplification medium 1 illustrated in Fig. 1A, that is, a manufacturing method of the laser amplification medium 1 according to the present embodiment will be described with reference to Fig. 5 and Fig. 6A to Fig. 6H. Fig. 5 is a flowchart illustrating a configuration example of a manufacturing method of the laser amplification medium 1 according to one embodiment. Fig. 6A is a sectional view illustrating that the laser amplification medium 1 of Fig. 1A can be manufactured by laminating first substrates 11 and second substrates 12. Fig. 6B to Fig. 6H are sectional views illustrating an example of states during the manufacturing of the laser amplification medium 1. Note that the lamination direction is the same Z-axis direction in all the drawings in the present disclosure.

The flowchart of Fig. 5 includes a total of four steps of a first step S1 to a fourth step S4. In response to start of the flowchart of Fig. 5, the first step S1 is performed.

In the first step S1, the first substrate 11 is produced. Herein, the first substrate 11 includes a first portion 20. The first substrate 11 may be formed of only the first portion 20. The first portion 20 is formed of a first material forming the clad part 2 of the laser amplification medium 1, and this first material may be, for example, glass, yttrium aluminum garnet (YAG) crystal, or YAG ceramics having predetermined properties. The first material has the same refractive index as the clad part 2.

Fig. 6B illustrates a cross section of a first substrate 110 that is thicker than a desired thickness. In the first step S1, the first substrate 11 having the desired thickness may be produced by first producing the first substrate 110 that is thicker than the desired thickness and scraping a part of the first substrate 110 off from both faces or one face thereof. As a method of scraping off, for example, a chemical mechanical polishing (CMP) and the like used in semiconductor manufacturing methods are known.

This step of scraping off may be performed as a part of the first step S1 or may be performed as a separate step from the first step S1. In the case of the latter, in the first step S1, instead of production of the first substrate 11 having a desired thickness, a thicker first substrate 110 may be produced.

In the first step S1, a required number of first substrates 11, 110 may be collectively produced. Alternatively, a required number of first substrates 11, 110 may be produced little by little by performing the first step S1 multiple times before and after other steps.

After the first step S1, the second step S2 is performed. In the second step S2, the second substrate 12 is produced. Herein, the second substrate 12 includes the first portion 20 and second portions 30. The second substrate 12 may be formed of only the first portion 20 and the second portions 30. The second portions 30 may be formed of a second material. The second material is a material forming the core parts 3 of the laser amplification medium 1 and is obtained by doping glass, YAG crystal, or YAG ceramics with suitable active element ions as the laser gain medium, for example. This active element may be, for example, neodymium, ytterbium, erbium, or the like.

It is preferable that the second material have the same refractive index as the core parts 3. However, the refractive index of the core part 3 may be even in the entire region or may continuously vary in accordance with the distance in the radial direction from the optical axis 31.

The plurality of second portions 30 formed by ion doping do not necessarily have an ideal shape due to a factor such as a manufacturing error. Herein, the ideal shape means rectangular parallelepipeds extending in the same direction as with the core parts 3 of Fig. 1A. In the present embodiment, however, as long as the core part 3 has a shape having practically sufficient accuracy even when a practical manufacturing error is included, the shape is simply referred to as "rectangular parallelepiped". The same applies to other geometrical definitions.

Fig. 6C illustrates a cross section of the second substrate 120 that is thicker than a desired thickness. In the second step S2, in the same manner as in the case of the first step S1, the second substrate 12 having the desired thickness may be produced by first producing the second substrate 120 that is thicker than the desired thickness and scraping off both faces or one face thereof. Further, this step of scraping off may be performed as a part of the second step S2 or may be performed as a separate step from the second step S2. In this respect, while being exposed on one surface of the second substrate 120, the second portions 30 are not necessarily required to reach the other surface.

In the second step S2, a required number of second substrates 12, 120 may be collectively produced. Alternatively, a required number of second substrates 12, 120 may be produced little by little by performing the second step S2 multiple times before and after other steps.

After the second step S2, the third step S3 is performed. In the third step S3, the first substrate 11, 110 and the second substrate 12, 120 are laminated. At this time, one surface of the second substrate 12, 120 is bonded to one surface of the first substrate 11, 110. In this bonding, it is preferable that both the first portions 20 be bonded so as to be optically integrated. Herein, bonding so as to be optically integrated means, for example, bonding such that, when light passes through the bonding interface, no undesired event such as refraction, reflection, diffraction, scattering, or the like occurs or, if any, the event is practically ignorable. Each of the first substrate 11, 110 and the second substrate 12, 120 after optically integrated may be referred to as a virtual substrate, a virtual layer, or the like. Further, the bonding interface after optically integrated may be referred to as a virtual surface, a virtual plane, a virtual bonding interface, or the like.

As a method for implementing such bonding, a room temperature bonding is known, for example. In any case, it is preferable to perform machining such as polishing on the surface to be bonded before performing bonding.

In Fig. 6D, the surface of the second substrate 120 on which the second portions 30 are exposed is bonded to the surface of the first substrate 110. A scrape-off portion 121 is then scraped off up to a predetermined thickness from the surface which is not bonded of the second substrate 120, and thereby the second substrate 12 having the desired thickness can be produced. Fig. 6E illustrates a bonded body of the first substrate 110 and the second substrate 12 after the scrape-off portion 121 of Fig. 6D has been scraped off. In the state illustrated in Fig. 6E, the side faces of the second portion 30 used as the core part 3 in the future include at least a planar portion in the +Z-axis direction and a planar portion in the -Z-axis direction, and it is preferable that both the portions be parallel to the XY-plane, that is, parallel to each other. In other words, it is preferable that the side faces 32 of each core parts 3 of the laser amplification medium 1 according to the present embodiment include at least two planar portions opposing in the Z-axis direction at the virtual bonding interface between the first substrate 11 and the second substrate 12.

The third step S3 may be repeated collectively for a required number of times of lamination or may be repeated little by little in accordance with timings to perform the first step S1 of producing the first substrate 11, 110 and the second step S2 of producing the second substrate 12, 120.

In Fig. 6F, a new first substrate 110 is further laminated on the surface of the second substrate 12 laminated on the first substrate 110. A scrape-off portion 111 is then scraped off up to a predetermined thickness from the surface which is not bonded of the new first substrate 110, and thereby the first substrate 11 having a desired thickness can be produced. Fig. 6G illustrates a bonded body of the first substrate 110, the second substrate 12, and the new first substrate 11 after the scrape-off portion 111 of Fig. 6F has been scraped off.

Fig. 6H illustrates a laminated body in which the first substrates 11, 110 and the second substrates 12 have been laminated for a required number of times in order to produce the laser amplification medium 1 of Fig. 1A. The scrape-off portions 111 are then scraped off from respective first substrates 110 of the lowermost layer and the uppermost layer, and thereby the first substrates 11 having the desired thickness are produced on the lowermost layer and the uppermost layer, respectively, and the laser amplification medium 1 of Fig. 6A is produced, that is, the laser amplification medium 1 of Fig. 1A is produced.

After the third step S3, the fourth step S4 is performed. In the fourth step S4, finishing is performed. As the finishing performed herein, for example, machining such as polishing may be performed on the end face in the X-axis direction and/or the Y-axis direction of the laser amplification medium 1 of Fig. 6A, for example.

In particular, it is preferable to machine one end face in the X-axis direction of the laser amplification medium 1 into a state suitable to be optically connected to the upstream device used for incidence of seed light, which is to be amplified, to each core part 3. Further, it is preferable to machine the other end face in the X-axis direction of the laser amplification medium 1 into a state suitable to externally emit a laser beam amplified by respective core parts 3. Alternatively, it is preferable to machine the other end face in the X-axis direction of the laser amplification medium 1 into a state suitable to be optically connected to a downstream device used for combining a plurality of laser beams amplified by the plurality of core parts 3, respectively, into a single high output laser beam.

When the fourth step S4 ends, the flowchart of Fig. 5 also ends.

In the manufacturing method of the laser amplification medium 1 according to the present embodiment, various changes can be added to the flowchart of Fig. 5 described above. For example, in the second step S2, the second substrate 12 may be produced by separately producing and machining the first portion 20 and the second portions 30 into desired shapes and then bonding the machined first portion 20 and second portions 30 alternatively to each other. In such a case, it is expected that it is possible to make the shape of the core part 3 closer to an ideal rectangular parallelepiped.

A modified example related to lamination of the laser amplification medium 1 according to the present embodiment will be described with reference to Fig. 7. Fig. 7 is a sectional view of a configuration example of the laser amplification medium 1 according to one embodiment.

In the modified example of Fig. 7, a plurality of first substrates 11 and a plurality of second substrates 12 are laminated alternatingly in the Z-axis direction. Among the plurality of laminated second substrates 12, however, with respect to any combination of two second substrates 12 that interpose a single first substrate 11 therebetween and are the closest to each other, the arrangement of the plurality of core parts 3 in the Y-axis direction is staggered. In other words, two first substrates 11 and one second substrate 12 are interposed between a core part 3 of interest and another core part 3 that is the closest in the +Z-axis direction or the -Z-axis direction from the core part 3 of interest. Further, in other words, in the modified example of Fig. 7, the plurality of core parts 3 are arranged in a so-called staggered array in a cross section of the laser amplification medium 1 taken along a virtual plane orthogonal to the X-axis direction.

As discussed above, since the laser amplification medium 1 according to the present embodiment can be manufactured by alternatingly laminating the first substrates 11 and the second substrates 12, the modified example as with Fig. 7 can be easily employed. Such a modified example is expected to have a potential that it is advantageous for causing the pumping light 4B to enter all the core parts 3 more evenly when the pumping light 4B enters the side face of the clad part 2, as illustrated in Fig. 3B, for example.

### [Second Embodiment]

A configuration example of the laser amplification medium 1 according to another embodiment will be described with reference to Fig. 8. Fig. 8 is a transparent perspective view illustrating a partial configuration example of the laser amplification medium 1 according to one embodiment.

The laser amplification medium 1 of Fig. 8 includes the clad part 2, the core part 3, and a plurality of flow paths 5. Although the total number of flow paths 5 is eight and the total number of core parts 3 is one in the example of Fig. 8, these numerical values are mere examples and do not limit the present embodiment. On the other hand, it is preferable to have a single clad part 2.

The flow paths 5 are hollows provided inside the clad part 2 and extend in the same X-axis direction as the core part 3. The flow paths 5 penetrate the clad part 2 in the X-axis direction. The flow paths 5 may be defined as side faces parallel to the X-axis direction.

In the example of Fig. 8, a cross section of each flow path 5 taken along a virtual plane orthogonal to the X-axis direction is rectangular. The rectangle of the flow path 5 may be a different rectangle from a rectangle that is the shape of the cross section of the core part 3 taken along the same plane. In the example of Fig. 8, the rectangle of the flow path 5 has a larger area than the rectangle of the core part 3. Herein, the sectional shape and the sectional area of the flow path 5 are mere examples, and the cross section of the flow path 5 may have a shape other than a rectangle and is not necessarily required to have a larger area than the sectional area of the core part 3.

An example of a manufacturing method of the flow path 5 will be described. The flow path 5 may be produced by forming a hollow inside the clad part 2 of the laser amplification medium 1 according to the first embodiment, for example. As a specific scheme to achieve this, for example, microfabrication techniques or the like such as ablation using femtosecond laser are known.

An example of usage of the flow path 5 according to the present embodiment will be described with reference to Fig. 9. Fig. 9 is a graph illustrating an example of a method of controlling the temperature of the laser amplification medium 1 by supplying a flow of a predetermined fluid into the laser amplification medium 1 using the flow path 5 according to one embodiment.

In the graph of Fig. 9, the horizontal axis represents time, and the vertical axis represents the temperature of the laser amplification medium 1. In the vertical axis, a target temperature at which the laser amplification medium 1 functions at the highest efficiency is represented by "T₀", and the minimum temperature and the maximum temperature at which the laser amplification medium 1 functions suitably are represented by "Tₘᵢₙ" and "Tₘₐₓ", respectively.

When the temperature of the laser amplification medium 1 rises above the maximum temperature Tₘₐₓ, it will be possible to reduce the temperature of the laser amplification medium 1 to a temperature closer to the target temperature T₀ by supplying a flow of a fluid whose temperature is the target temperature T₀ or lower into the flow path 5 to perform cooling C of the laser amplification medium 1. In contrast, when the temperature of the laser amplification medium 1 falls below the minimum temperature Tₘᵢₙ, it will be possible to increase the temperature of the laser amplification medium 1 to a temperature closer to the target temperature T₀ by supplying a flow of a fluid whose temperature is the target temperature T₀ or higher into the flow path 5 to perform heating H of the laser amplification medium 1. This fluid may be a liquid or may be a gas. As an example of this fluid, a helium gas may be used. A fluid having a desired refractive index may be used to suppress scattering of the pumping light 4A, 4B, 4C inside the laser amplification medium 1 or, contrarily, may be used to contribute to the scattering. When the fluid suppresses the scattering, the pumping light 4A, 4B, 4C is expected to be more likely to reach a farther core part 3. In contrast, when the fluid contributes to the scattering, the pumping light 4A, 4B, 4C is expected to be more likely to reach a core part 3 behind another core part 3.

A configuration example of the laser amplification medium 1 including a plurality of core parts 3 and a plurality of flow paths 5 will be described with reference to Fig. 10A and Fig. 10B. Fig. 10A is a sectional view illustrating a configuration example of the laser amplification medium 1 according to one embodiment. Fig. 10B is a sectional view illustrating another configuration example of the laser amplification medium 1 according to one embodiment.

The laser amplification medium 1 of Fig. 10A is obtained by increasing the number of core parts 3 of the laser amplification medium 1 illustrated in Fig. 8 to a total of 16 to arrange these 16 core parts 3 in a 4x4 two-dimensional array in the same manner as in the case of Fig. 1A and increasing the number of flow paths 5 illustrated in Fig. 8 to a total of 20 to arrange these 20 flow paths 5 around the 16 core parts 3, for example.

The laser amplification medium 1 of Fig. 10B is obtained by, for example, changing the number of flow paths 5 of the laser amplification medium 1 of Fig. 10A to a total of 24 and the number of core parts 3 to a total of 18, respectively, and arranging these total of 42 flow paths 5 and core parts 3 in a 6x7 two-dimensional array in a cross section taken along a virtual plane orthogonal to the X-axis direction. In such a two-dimensional array, however, the flow paths 5 and the core parts 3 are arranged alternatingly in the Z-axis direction, and 6 flow paths 5 and 6 core parts 3 are arranged in the Y-axis direction. In this arrangement, in view of the core parts 3, they are arranged in a 6x3 two-dimensional array. Further, in view of the flow paths 5, they are arranged in a 6x4 two-dimensional array.

In Fig. 10A, a thermal resistance R1 between a core part 3A and the flow path 5 and a thermal resistance R2 between a core part 3B and the flow path 5 are considered. The core part 3A is located in the outer area in a 4x4 two-dimensional array. Thus, no other core part 3 is present between the core part 3A and a flow path 5A having the shortest distance to the core part 3A. On the other hand, the core part 3B is located in the inner are in the 4x4 two-dimensional array. Thus, another core part 3 is present between the core part 3B and a flow path 5B having the shortest distance to the core part 3B. Therefore, the thermal resistance R2 is expected to be larger than the thermal resistance R1. In other words, when the same fluid flows in all the flow paths 5 under the same condition, it is more difficult to control the temperature of the core part 3B than the temperature of the core part 3A. Further, in other words, a temperature difference is likely to occur between the core part 3A and the core part 3B.

Similarly, in Fig. 10B, a thermal resistance R3 between a core part 3C and the flow path 5 and a thermal resistance R4 between a core part 3D and the flow path 5 are considered. The core part 3C is located in the outer area in a 6x3 two-dimensional array. On the other hand, the core part 3D is located in the inner area in the same two-dimensional array. Herein, no other core part 3 is present between the core part 3C and flow paths 5C, 5D having the shortest distance to the core part 3C. Similarly, no other core part 3 is present between the core part 3D and flow paths 5E, 5F having the shortest distance to the core part 3D. Therefore, the thermal resistance R3 and the thermal resistance R4 are expected to be the same. In other words, a temperature difference is less likely to occur between the core part 3C and the core part 3D. Further, in other words, it may be easier to control the temperatures of the plurality of core parts 3 to be even in the case of Fig. 10B compared to the case of Fig. 10A. This leads to an ability of the laser amplification medium 1 to output a higher quality laser beam.

With further development of such a concept, the flow paths 5 and the core parts 3 may be arranged as illustrated in Fig. 11. Fig. 11 is a sectional view illustrating yet another configuration example of the laser amplification medium 1 according to one embodiment. In Fig. 11, a plurality of flow paths 5 and a plurality of core parts 3 are arranged in a so-called checker array. In other words, the flow paths 5 and the core parts 3 are two-dimensionally arranged in a cross section taken along a virtual plane orthogonal to the X-axis direction. Herein, the core parts 3 are adjacent to each flow path 5 in the Y-axis direction and the Z-axis direction, and the flow paths 5 are adjacent to each core part 3 in the Y-axis direction and the Z-axis direction.

### [Third Embodiment]

The laser amplification medium 1 that enables deflection control will be described with reference to Fig. 12. Fig. 12 is a sectional view illustrating a configuration example of the laser amplification medium 1 according to one embodiment.

The laser amplification medium 1 of Fig. 12 is obtained by, for example, increasing the number of core parts 3 of the laser amplification medium 1 of Fig. 1A to a total of 25 and changing 15 out of 25 core parts 3 into stress application parts 7. Herein, the remaining 10 core parts 3 and the 15 stress application parts 7 each have a rectangle parallelepiped shape extending in the X-axis direction. The core parts 3 and the stress application parts 7 are arranged in a 5x5 two-dimensional array in a cross section taken along a virtual plane orthogonal to the X-axis direction. Herein, the stress application parts 7 and the core parts 3 are arranged alternatingly in the Y-axis direction. Further, five stress application parts 7 are arranged in a line in the Z-axis direction, and five core parts 3 are arranged in a line in the Z-axis direction. In other words, in the laser amplification medium 1 of Fig. 12, the stress application parts 7 are arranged on both sides in the Y-axis direction with respect to each of the plurality of core parts 3.

The stress application parts 7 may be formed by the same method as the core parts 3 or may be formed by making spaces as the flow paths 5 inside the clad part 2 and supplying a suitable material to flow and solidify in the internal spaces, for example. In both the cases, the core part 3 is subjected to a stress from both sides in the Y-axis direction, and thereby the polarization direction of light propagating in the X-axis direction inside the core part 3 is controlled to be closer to the Z-axis direction. This leads to an ability of the laser amplification medium 1 to output a higher quality laser beam. Further, it may be possible to use the laser amplification medium 1 in applications such as beam combining using linear deflection or generation of high frequency waves using a nonlinear optical phenomenon.

Although the invention made by the inventors has been specifically described above based on the embodiments, it is apparent that the present invention is not limited to these embodiments and can be changed in various ways within the scope not departing from the spirit of the invention. Further, respective features described in the above embodiments can be combined in any manner to the extent not technically inconsistent.

The present application claims a priority based on Japanese Patent Application No. 2021-97759 filed June 11, 2021, the entire disclosure of which is incorporated therein.

## Claims

1. A laser amplification medium comprising:
a clad part having a predetermined first refractive index;
a first core part and a second core part each having a second refractive index that is higher than the first refractive index, each extending parallel to a predetermined axis direction, and having respective side faces covered with the clad part;
a virtual first layer including the first core part, the second core part, and a part of the clad part; and
a virtual second layer and a virtual third layer each including another part of the clad part,
wherein the first layer is laminated and bonded between the second layer and the third layer and in a predetermined lamination direction orthogonal to the axis direction, and
wherein in each of the first core part and the second core part, the side faces comprise
a first planar portion of the first layer, the first planar portion being included in a virtual first surface, the first surface being a virtual bonding interface with the second layer and being orthogonal to the lamination direction, and
a second planar portion of the first layer, the second planar portion being included in a virtual second surface, the second surface being a virtual bonding interface with the third layer and being orthogonal to the lamination direction, and the second planar portion opposing to the first planar portion.

2. The laser amplification medium according to claim 1 further comprising:
a third core part and a fourth core part each having the second refractive index, each extending parallel to the axis direction, and having respective side faces covered with the clad part;
a virtual fourth layer including the third core part, the fourth core part, and a part of the clad part; and
a virtual fifth layer including another part of the clad part,
wherein the fourth layer is laminated and bonded between the third layer and the fifth layer and in the lamination direction,
wherein in each of the third core part and the fourth core part, the side faces comprise
a third planar portion of the fourth layer, the third planar portion being included in a virtual third surface being a virtual bonding interface with the third layer and being orthogonal to the lamination direction, and
a fourth planar portion of the fourth layer, the fourth planar portion being included in a virtual fourth surface being a virtual bonding interface with the fifth layer and being orthogonal to the lamination direction, and the fourth planar portion opposing to the third planar portion.

3. The laser amplification medium according to claim 2, wherein in a cross section taken along a virtual plane orthogonal to the axis direction, the first core part, the second core part, the third core part, and the fourth core part are arranged in a staggered array.

4. The laser amplification medium according to any one of claims 1 to 3, wherein the clad part comprises a side face configured such that pumping light enters the side face from outside.

5. The laser amplification medium according to any one of claims 1 to 4, wherein the clad part comprises an end face configured such that pumping light enters the end face from outside, the laser amplification medium further comprising:
a second clad part having a third refractive index that is lower than the first refractive index and covering a side face of the clad part.

6. The laser amplification medium according to any one of claims 1 to 5 further comprising a pumping light optical path extending in the axis direction such that a side face of the pumping light optical path is covered with the clad part,
wherein the side face of the pumping light optical path is configured such that pumping light entering an end face of the pumping light optical path leaks out to the clad part via the side face.

7. The laser amplification medium according to any one of claims 1 to 6 further comprising a flow path extending in the axis direction such that a side face of the flow path is covered with the clad part and configured such that a predetermined fluid passes through inside of the flow path.

8. The laser amplification medium according to any one of claims 1 to 7 further comprising a stress application part configured to apply a stress from both sides to the first core part in a direction orthogonal to both the axis direction and the lamination direction and control a polarization direction of light propagating in the first core part.

9. A laser amplification medium manufacturing method comprising:
producing a first layer including a plurality of first regions having a predetermined first refractive index and a plurality of second regions having a second refractive index that is larger than the first refractive index;
producing a second layer and a third layer having the first refractive index; and
laminating the second layer, the first layer, and the third layer in this order in a predetermined lamination direction,
wherein the laminating includes
bonding the second layer to a first surface of the first layer orthogonal to the lamination direction so as to bond the plurality of first regions and the second layer to each other, and
bonding the third layer to a second surface of the first layer opposing to the first surface so as to bond the plurality of first regions and the third layer to each other,
wherein the producing the first layer includes
producing the plurality of second regions so that the plurality of second regions comprise a first core part and a second core part, the first core part and the second core part each extending parallel to a predetermined axis direction parallel to the first surface and each having a side face including a first planar portion included in the first surface and a second planar portion included in the second surface,
wherein the laminating the second layer, the first layer, and the third layer includes
laminating the second layer, the first layer, and the third layer so that the plurality of first regions, the second layer, and the third layer, which are integrated with each other, function as a clad part covering the side face in each of the first core part and the second core part.

10. The laser amplification medium manufacturing method according to claim 9 further comprising:
producing a fourth layer including a plurality of third regions having the first refractive index and a plurality of fourth regions having the second refractive index;
producing a fifth layer having the first refractive index; and
laminating the third layer, the fourth layer, and the fifth layer in this order in the predetermined lamination direction,
wherein the laminating the third layer, the fourth layer, and the fifth layer includes
bonding the third layer to a third surface of the fourth layer orthogonal to the lamination direction to optically integrate the plurality of third regions and the third layer with each other, and
bonding the fifth layer to a fourth surface of the fourth layer opposing to the third surface to optically integrate the plurality of third regions and the fifth layer with each other,
wherein the producing the fourth layer includes
producing the plurality of fourth regions so that the plurality of fourth regions comprise a third core part and a fourth core part, the third core part and the fourth core part each extending in the axis direction and each having a side face including a third planar portion included in the third surface and a fourth planar portion included in the fourth surface, and
wherein the laminating the third layer, the fourth layer, and the fifth layer further includes
laminating the third layer, the fourth layer, and the fifth layer so that the plurality of third regions, the third layer, and the fifth layer, which are integrated with each other, function as a clad part covering the side face in each of the third core part and the fourth core part.
